# EUROPEAN PATENT SPECIFICATION

(11) **EP 2 523 317 B1**
(45) Date of publication and mention of the grant of the patent: **01.01.2014**
(21) Application number: 10809271.9
(22) Date of filing: 11.11.2010
(51) Int. Cl.: H02K 19/20, H02K 7/116, H02K 16/00

(54) **ELECTRICAL ENERGY MULTI-GENERATOR**
ELEKTROENERGIE-MULTIGENERATOR
MULTIGÉNÉRATEUR D'ÉNERGIE ÉLECTRIQUE

(30) Priority: 11.11.2009 ES 200902144
(43) Date of publication of application: 14.11.2012
(73) Proprietor: Conde Mendez, Abrahan, 15140 Pastoriza (La Coruña) (ES)
(72) Inventor: Conde Mendez, Abrahan, 15140 Pastoriza (La Coruña) (ES)
(74) Representative: Lorente Berges, Ana
(86) International application number: PCT/ES2010/000453
(87) International publication number: WO 2011/101501

(56) References cited:
- EP-A2- 1 089 425
- DE-A1- 10 154 109
- DE-A1- 19 908 557
- GB-A- 2 234 863
- US-A1- 2009 200 882

## Description

### PURPOSE OF THE INVENTION

This invention refers to an electrical energy multigenerator, based on Faraday induction concepts and with such characteristics that the corresponding magnetic inductor field and the induced generated magnetic fields, in line with the Lenz Law, offer little resistance in the sense of the rotation of the blades, needing very little mechanical force from the outside applied to the corresponding axle to generate power.

The purpose of the invention is to achieve an electrical energy multigenerator that works alone as a generator and never as an engine, in which the external energy applied to the axle stops being directly proportional to the electrical energy generated, with the following increase in the performance that this supposes.

### BACKGROUND TO THE INVENTION

Electrical energy generators based on the Faraday induction principle basically consist of an inductor circuit that generates a magnetic field which induces in another circuit an electrical motor force. At the same time it consists of an induced circuit formed by a coil placed within a hollow cylindrical shell, made of ferromagnetic material, which is generally called the stator, which lies on grooves exposed for this effect, while the aforementioned inductor circuit is formed by a coaxial cylindrical blade with the stator to which a continuous current is supplied to generate the inductor field commonly called excitation.

Following the aforementioned basic explanation of what an electrical energy generator is, upon rotating the blade using an external mechanical force, a variation of the flow is achieved, passing the energy generated from the excitation of each semi-cycle of the induced frequency, in such a way that the external mechanical energy applied to the axle is directly proportional to the opposite of the excitation's magnetic field and to that generated by the intensity that circulates through the induced coil, with the objective of rotating the blade and in this way generating the work frequency of the generator.

In the construction of the current generators, the shell is formed by magnetic locks placed flat one on top of the other, making the slopes that have to form the grooves coincide for the placement of the induced coil. The blade locks are also flat and placed on top of each other, being affected by a central hole placed to introduce the axle of the generator.

This construction is also used in the engines, so that current generators can work as engines.

For this reason, the external mechanical energy applied to the generator's axle is directly proportional to the electrical energy generated, while in the engines, the mechanical force of the axle is directly proportional to the electrical energy supplied.

Among the most important Patent documents in relation to the concrete state of the art of the request, one can cite the WO03/073590 and WO92/13383 Patents, which present the problem that each circuit has an excitation coil and an induced coil, which means that the generator has to include many excitation coils.

Document DE 199 08 557 discloses an electrical generator having several radial magnetic circuits, each of them with a lower magnetic radius and an upper magnetic radius.

Particularly in the WO 03/073590 Patent it has been checked that in each magnetic circuit only a quarter of the amperes/turn of the inductor coil pass to the induced coil, which is why if it has 100 amperes/turn in the excitation of the inductor coil, in the induced one it only induces 25 amperes/turn, although the advantage that this generator has in the aforementioned Patent is that if the blade rotates at 3,000 rpm, the circulation of the magnetic flow opens and closes in each circuit 36,000 times per minute, which generates a large electromotor force.

As a result, what we have is that the induced electromotor force is directly proportional to the variation of the magnetic flow, in such a way that a part of the amperes/turn of the excitation coil pass to the induced coil generating a magnetic flow that supposes the flow that it generates, according to the Lenz Law, which is why the best generator is that which makes the variations of the magnetic flow quickest and where also the inductor and induced magnetic fields offer the best force possible in terms of the rotations of the axle.

### DESCRIPTION OF THE INVENTION

The electrical energy multigenerator which is advocated, based on that described in this Invention Patent WO 03/073590, or that which is the same in the Faraday induction principle and through the variation of the reluctance, will only work as a generator and not as an engine, with the external energy no longer being applied to the axle directly proportional to the generated electrical energy.

Taking into account that if in a thermal power plant the turbine of the generator group is uncoupled and if the pony motor is coupled to take the generator to nominal revolution, upon coupling it to the network it can generate reactive energy. Since, in the multigenerator of this invention what is established is that the pony motor acts as the turbine and this is enough due to the little opposition of the magnetic fields that the rotors generate, for the generation of electrical energy.

As a result of this, through the multigenerator of the invention, the steam turbine or the turbines of the dams can be removed, being able to install in the consumption places and with the high and mid voltage transport lines not being necessary.

On the other hand, the multigenerator is considered to create clean electrical energy, where necessary, without contamination, being able to be applied to all means of transport, industry, homes, etc, solving in this way an environmental and energy problem.

More precisely, the electrical energy multigenerator of the invention is of the type of which has radial magnetic circuits, each one of which is formed by two columns joined by a lower magnetic radius and by a upper magnetic radius, each one being the radius' provided by a rotor to open/close and change the circulation of the magnetic flow, while the external column is provided with an induced coil and the central column, common to all the multigenerator radius' is provided with an excitation coil, fed by a continuous current, in such a way that in determined cases this central column may be made of a permanent magnet that causes the excitation.

The rotational movement of the rotors is done by means of a mechanical coupling to a main motorized wheel, and an external mechanical force is applied to its axle, generated by a motor, to vary the circulation of the magnetic flow, which is generated by the electromotor force in the induced coils.

Starting from these characteristics, the multigenerator of this invention is characterized because the column of the central nucleus is common to all the radial magnetic circuits of the multigenerator, and this is provided with a central excitation coil that is fed by a continuous current, which creates the magnetic flow to induce, alternatively, an electromotor force in all the induced coils of the external columns corresponding to the radial magnetic circuits that they form. The induced electromotor force will be directly proportional to the revolutions of the rotors.

Another characteristic that the invention's multigenerator has is that the central column with is excitation coil may be substituted by a column with a permanent magnet, where the regulation of the power will be made by the variation of the revolutions in the motorized wheel. This application is interesting for small means of transportation.

It is also a new characteristic in the invention's electrical energy multigenerator the fact that is has a rotor on each radial magnetic circuit, all of these with the objective of opening, closing and varying the circulation of the magnetic flow, and in the case that the energy of the central excitation coil passes to all the external radial coils it generates, alternatively, an electromotor force in the induced coils.

In terms of the magnetic locks that the invention's multigenerator's rotor form, these are flat and are placed end to end. In the central part, the axle of the rotor is placed parallel to them, with 90° inclination from these, continuing to place the magnetic locks on top of each other, until reaching the form of the rotational group. These magnetic locks will be separated by an insulating varnish, incorporating diamagnetic materials in the construction of the rotor, to guarantee a permanent determined sense of rotation for this.

The essence of the rotor is that its construction shape sets that the circulation of the magnetic flow varies from a quicker way, having less opposition to the sense of the rotations and that the inductor and induced magnetic flows of the rotor help the sense of rotation, needing very little external mechanical force applied to the axle of the group to pass excitation energy to the induced circuit coils.

Another new characteristic of the invention is the fact that the inductor coil and the induced coils are fixed on the corresponding columns.

On the other hand, it has been foreseen that the multigenerator's rotors are mechanically synchronized on the central axle, as this only serves to vary the circulation of the magnetic flow of the radial magnetic circuits, without the incorporation of any coil whatsoever.

Finally, it is worth saying that the power of the invention's electrical energy multigenerator can vary in terms of its use, varying the power in the excitation coil when it needs to always have the same electromotor force, likewise varying the revolutions of the rotors, or both at the same time for some applications in certain forms of transportation.

### DESCRIPTION OF THE DRAWINGS

To complement the description being made and with the purpose of aiding better comprehension of the characteristics of the invention, a figure accompanies this description as a non-limiting, illustrative drawing which represents the following:
Figure 1 - Corresponds to a schematic representation of a laminated lock which forms the static magnetic nucleus which corresponds to the electrical energy multigenerator of this invention.
Figure 2.- Shows a schematic representation in a diametric section of the invention's multigenerator.
Figure 3.- Shows a upper side view of the multigenerator.
Figure 4.- Shows a sectional schematic representation with a gear system for the working of the invention's multigenerator.
Figure 5.- Shows a schematic representation from above of the group representation in the previous figure.

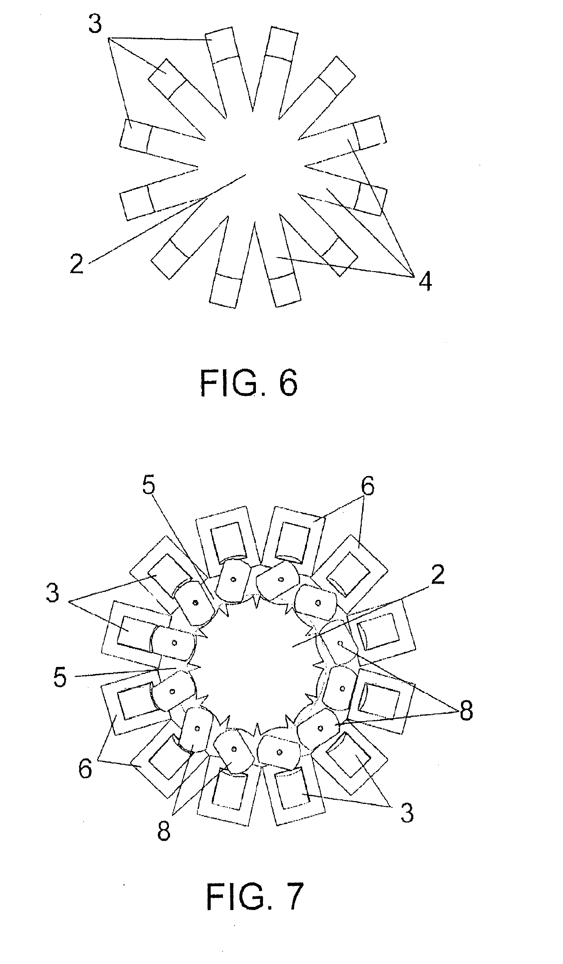

Figure 6.- Shows a representation of the multigenerator with twelve perfectly distributed magnetic circuits, from above the lower radius'.
Figure 7.- Shows a view of the same multigenerator with twelve perfectly distributed magnetic circuits, from a view above the upper radius' and with the rotors placed.

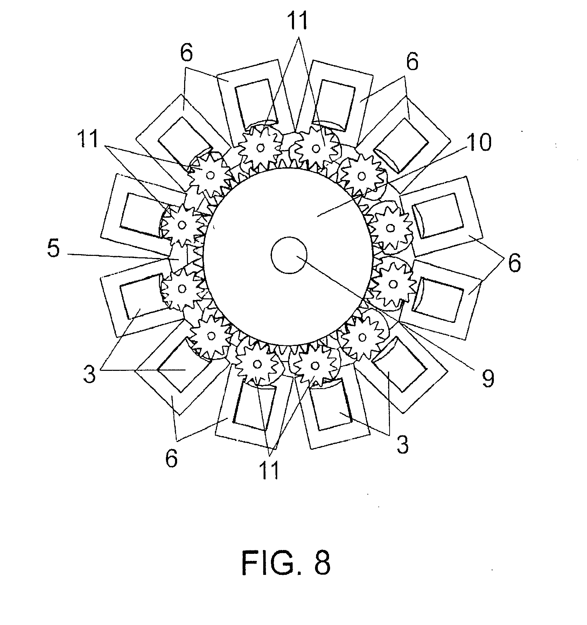

Figure 8.- Shows, finally, a representation of the same multigenerator with twelve perfectly distributed magnetic circuits, from a view from above, incorporating the coupling gears and the workings of the rotors.

### PREFERABLE MAKE OF THE INVENTION

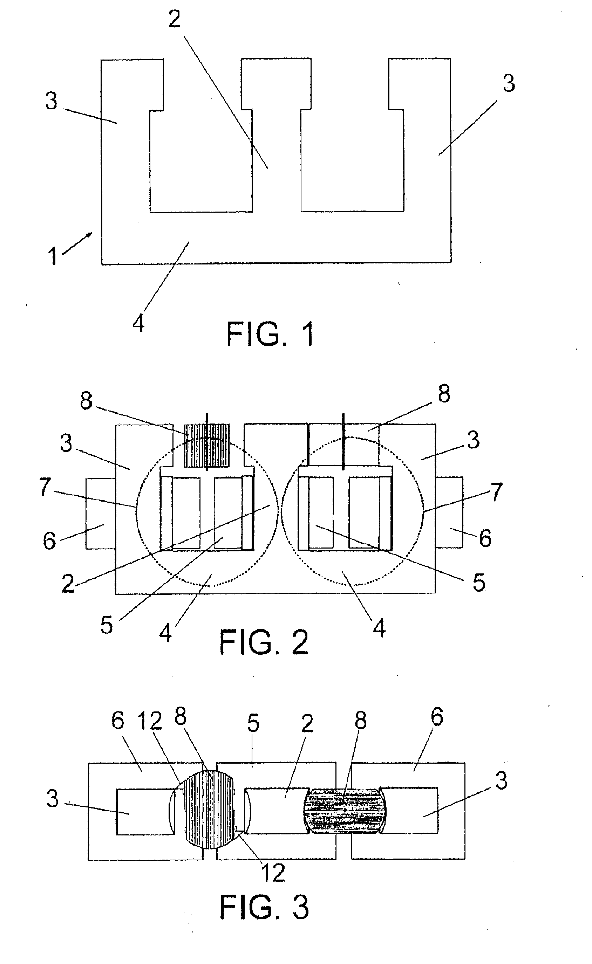

As can be seen in the figure and in concrete relation with figure 1, the radial magnetic circuit is set in the referenced lock (1) corresponding to the static magnetic nucleus of the multigenerator, indicating with (2) the magnetic column where the excitation coil is placed, and with the numbers (3) that indicate the magnetic columns where the induced coils are placed, referred to with the indication (4) corresponding to the inferior radius' of the radial magnetic circuit.

In figures 2 and 3 one can see the inductor element or the excitation coil (5) common to all the magnetic circuits, while the induced coils are referred to with number (6).

In figures 2, 3, 4 and 5 the workings in a given moment of the two radial magnetic circuits of the multigenerator are represented, where the magnetic circuit of the left is found with its open rotor (8) and the open circuit (7), on the right with its rotor (8) in a closed position and the circuit (7) closed.

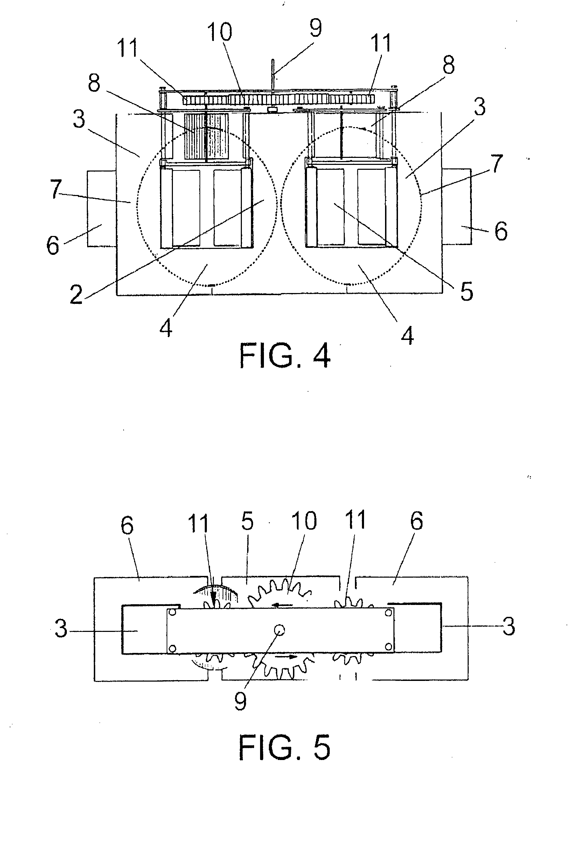

In figure 4 and 5, the reference (9) corresponds to the axles of the main and common motorized wheel (10), while reference (11) indicates the secondary wheels coupled to the rotor (8).

Following the aforementioned characteristics, the workings are as follows:

In figures 2, 3, 4 and 5, the situation at a given moment of the two radial magnetic circuits of the multigenerator is represented, where the magnetic circuit of the left is found with its rotor (8) open and the circuit open of the right with its rotor (8) closed.

When a continuous current is applied or supplied to the excitation coil (5), an external rotational mechanical force is applied to the motorized axle (9), a force which rotates the motorized wheel (10), transmitting through this the rotational movement to all the secondary wheels (11) coupled to the rotor (8), making these rotate. When the blade closes the circuit and the magnetic flow circulates, as a result of opening the circuit will reduce the circulation of the magnetic flow, and upon leaving the circuit open, it lets the magnetic flow circulate, in such a way that this variation of the magnetic flow makes that an electromotor force is induced in the induced coils (6), the electromotor force is directly proportional to the revolutions of the motorized wheel (10).

In the magnetic circuit of the multigenerator shown in figures 2, 3, 4 and 5, the rotor (8) keeps the magnetic circuit in the induced coil (6) open, generating in this the maximum induced electromotor force without any circulation of the amperes. In the right circuit the corresponding rotor (8) closes the magnetic circuit, making the magnetic flow of the excitation coil (5) circulate through the right rotor, through the right column (3), through the corresponding radius, to be incorporated once again to the excitation coil (5), in such a way that this circulation may be the inverse, according to the polarization of the excitation coil (5), in which moment in the induced coil (6) the maximum circulation of amperes and the minimum induced electromotor force is produced.

It is only left to state, that just as established above, and as shown in figure 3, each rotor (8) incorporates at least a charge (12) of diamagnetic materials, preferably two, suitably located to guarantee a rotational movement of said blade permanently in the same direction.

## Claims

1. Electrical energy multigenerator comprising several magnetic circuits, each one of said magnetic circuits being formed by a central vertical column (2) which is common to all said magnetic circuits and a second vertical external column (3) which is different for each magnetic circuit, said common column (2) and each of the external columns (3) being joined by a lower magnetic horizontal radius (4) and by an upper magnetic horizontal radius, each of said magnetic horizontal upper elements comprising a corresponding rotor (8) which comprises diamagnetic materials, in which
said common central column (2) incorporates a common excitation coil (5) and each of the external columns (3) incorporates an induced coil (6), wherein each rotor (8) is mechanically coupled to a secondary wheel (11), with all said secondary wheels (11) corresponding to each of the rotors being mechanically coupled to a main motorized wheel (10) and with said main wheel being moved by a motor.

2. Electrical energy multigenerator according to claim 1, comprising a rotor (8) in each radial magnetic circuit.

3. Electrical energy multigenerator according to claim 2, where all the rotors (8) form radius in the same part of the generator.

4. Electrical energy multigenerator according to anyone of claims 2 or 3, where all the rotors (8) are synchronized.

5. Electrical energy multigenerator according to claim 1, where the excitation coil (5) and the induced coils (6) are attached and fixed to the corresponding columns (2, 3).

6. Electrical energy multigenerator according to claim 1, where the corresponding laminated locks (1) that form the structure for the rotor (8) are placed standing, parallel to the axle and placed perpendicularly flat in the direction of the rotation.

## Patentansprüche

1. Elektrischer Energie-Multigenerator mit mehreren Magnetkreisen, von denen jeder dieser Magnetkreise aus einer zentralen vertikalen Säule (2), die alle genannten Magnetkreise gemeinsam haben, und einer zweiten äußeren vertikalen Säule (3), die für jeden Magnetkreis anders ist, besteht, wobei die genannte gemeinsame Säule (2) und jede der äußeren Säulen (3) über einen tieferen magnetischen horizontalen Radius (4) und über einen höheren magnetischen horizontalen Radius verbunden sind, wobei jedes dieser genannten magnetischen horizontalen oberen Elemente einen entsprechenden Rotor (8) aufweist, der diamagnetisches Material umfasst, wobei
diese gemeinsame zentrale Säule (2) eine gemeinsame Erregerspule (5) umfasst und jede der äußeren Säulen (3) eine Induktionsspule (6) umfasst, in der jeder Rotor (8) mechanisch mit einem sekundären Rad (11) verbunden ist, wobei alle diese sekundären Räder (11), die den einzelnen Rotoren entsprechen, mechanisch mit einem motorisierten Hauptrad (10) verbunden sind, das von einem Motor bewegt wird.

2. Elektrischer Energie-Multigenerator nach Anspruch 1, mit einem Rotor (8) in jedem radialen Magnetkreis.

3. Elektrischer Energie-Multigenerator nach Anspruch 2, bei dem alle Rotoren (8) Radien an der gleichen Stelle des Generators bilden.

4. Elektrischer Energie-Multigenerator nach Anspruch 2 oder 3, bei dem die Rotoren (8) synchronisiert sind.

5. Elektrischer Energie-Multigenerator nach Anspruch 1, bei dem die Erregerspule (5) und die Induktionsspulen (6) an den entsprechenden Säulen (2, 3) angebracht und befestigt sind.

6. Elektrischer Energie-Multigenerator nach Anspruch 1, bei dem die entsprechenden Lamellenschleusen (1), die die Struktur des Rotors (8) bilden, stehend, parallel zur Achse und senkrecht gerade zur Drehrichtung angebracht sind.

## Revendications

1. Multigénérateur d'énergie électrique comprenant une série de circuits magnétiques, chacun de ces circuits magnétiques étant formé par une colonne verticale centrale (2) qui est commune à tous les circuits magnétiques mentionnés et par une seconde colonne externe verticale (3) qui est différente pour chaque circuit magnétique. La colonne commune (2) et chacune des colonnes externes (3) sont unies par un rayon horizontal magnétique inférieur (4) et par un rayon horizontal magnétique supérieur et chacun desdits éléments magnétiques horizontaux supérieurs a son propre rotor (8) qui contient des matériaux diamagnétiques, dans lesquels
la colonne centrale commune mentionnée (2) est dotée d'une bobine d'excitation commune (5) et chacune des colonnes externes (3) est dotée d'une bobine d'induction (6), dans laquelle chaque rotor (8) est accouplé mécaniquement à une roue secondaire (11), et où toutes les roues secondaires (11) correspondant à chacun des rotors sont accouplées mécaniquement à une roue motorisée principale (10) et où ladite roue principale est propulsée par un moteur.

2. Multigénérateur d'énergie électrique selon la revendication 1, comprenant un rotor (8) dans chaque circuit magnétique radial.

3. Multigénérateur d'énergie électrique selon la revendication 2, où tous les rotors (8) forment un rayon dans la même partie du générateur.

4. Multigénérateur d'énergie électrique suivant l'une quelconque des revendications 2 ou 3 où tous les rotors (8) sont synchronisés.

5. Multigénérateur d'énergie électrique selon la revendication 1, où la bobine d'excitation (5) et les bobines d'induction (6) sont reliées et fixées à la colonne correspondante (2, 3).

6. Multigénérateur d'énergie électrique suivant la revendication 1, où les verrous laminés correspondants (1) qui forment la structure du rotor (8) sont placés verticalement, parallèlement à l'essieu et en position plane et perpendiculaire par rapport au sens de la rotation.
